# EUROPÄISCHE PATENTSCHRIFT

(11) **EP 2 572 118 B1**
(45) Veröffentlichungstag und Bekanntmachung des Hinweises auf die Patenterteilung: **16.09.2015**
(21) Anmeldenummer: 11722734.8
(22) Anmeldetag: 18.05.2011
(51) Int. Cl.: F16D 25/08, F16D 25/10

(54) **DOPPELKUPPLUNG FÜR EIN DOPPELKUPPLUNGS-WECHSELGETRIEBE IN KRAFTFAHRZEUGEN**
DOUBLE CLUTCH FOR A DOUBLE-CLUTCH VARIABLE-SPEED TRANSMISSION IN MOTOR VEHICLES
DOUBLE EMBRAYAGE POUR UNE TRANSMISSION À DOUBLE EMBRAYAGE DANS DES VÉHICULES AUTOMOBILES

(30) Priorität: 19.05.2010 DE 102010021036
(43) Veröffentlichungstag der Anmeldung: 27.03.2013
(73) Patentinhaber: Audi AG, 85045 Ingolstadt (DE)
(72) Erfinder: JAKOB-BODENHAGEN, Mathias, 85080 Gaimersheim (DE); FLEISCHMANN, Hans-Peter, 85134 Stammham (DE); SCHOLLE, Tassilo, 85055 Ingolstadt (DE)
(74) Vertreter: Wohnert, Dietmar
(86) Internationale Anmeldenummer: PCT/EP2011/002471
(87) Internationale Veröffentlichungsnummer: WO 2011/144328

(56) Entgegenhaltungen:
- WO-A2-2011/019532
- DE-A1-102009 047 953
- GB-A- 2 191 252
- US-A1- 2007 240 961

## Beschreibung

Die Erfindung betrifft eine Doppelkupplung für ein Doppelkupplungs-Wechselgetriebe in Kraftfahrzeugen gemäß dem Patentanspruch 1.

Eine derartige Doppelkupplung mit zwei axial nebeneinander positionierten Lamellenkupplungen beschreibt die DE 101 46 606 A1, bei der ein trommelförmiges Kupplungsgehäuse als antreibendes Kupplungselement zwei über Kupplungslamellen angekoppelte Kupplungsnaben umschließt, die trieblich mit zwei koaxialen Eingangswellen des Wechselgetriebes verbunden sind. Eine derartige Kupplungsanordnung ermöglicht einen symmetrischen Aufbau vieler Kupplungselemente unter Verwendung von fertigungstechnisch günstigen Gleichteilen. Die Betätigung der Lamellenkupplungen erfolgt hydraulisch mittels innerhalb des Kupplungsgehäuses und der Kupplungslamellen integrierter Ringkolben, deren Druckbeaufschlagung durch Kanäle in den Getriebe-Eingangswellen erfolgt. Dies bedingt einen nicht unbeträchtlichen Dichtungs- und Fertigungsaufwand zur wirksamen Steuerung der Lamellenkupplung und gegebenenfalls zu deren Versorgung mit Kühlöl.

Aus der DE 10 2005 027 467 A1 ist eine weitere Drehmomentübertragungsvorrichtung bekannt, die einen feststehenden Kolben und eine drehbare Einrückplatte umfasst. Die drehbare Einrückplatte ist benachbart zu einem drehbaren Gehäuse und von diesem durch eine Rückstellfederanordnung getrennt angeordnet. In einem vorbelastungszustand ist die Rückstellfederanordnung zwischen der Einrückplatte und dem drehbaren Gehäuse eingefangen.

Aus der WO 2011/019532 A2 ist eine Doppelkupplung für ein Doppelkupplungs-Wechselgetriebe in Kraftfahrzeugen bekannt. Diese weist zwei nasslaufende Lamellenkupplungen auf, die axial hintereinander in einem Getriebegehäuse angeordnet sind. Zwischen den mit Drucköl beaufschlagbaren Ringkolben und den von außerhalb des Kupplungsgehäuses beaufschlagbaren Anpressschreiben ist jeweils ein axial Wälzlager angeordnet.

Aufgabe der Erfindung ist es, eine Doppelkupplung vorzuschlagen, die eine robuste Konstruktion aufweist und deren hydraulische Betätigung und gegebenenfalls Versorgung mit Kühlöl einfacher und fertigungstechnisch günstiger ausgeführt ist.

Diese Aufgabe wird erfindungsgemäß mit den Merkmalen des Patentanspruches 1 gelöst. Vorteilhafte Weiterbildungen der Erfindung sind den weiteren Patentansprüchen entnehmbar.

Erfindungsgemäß wird vorgeschlagen, dass die Ringkolben in beiderseits der Lamellenkupplungen vorgesehenen Stirnwänden des Getriebegehäuses verschiebbar gelagert und über in den Stirnwänden angeordnete Kanäle mit Drucköl versorgt werden und dass zwischen den Ringkolben und den von außerhalb des Kupplungsgehäuses beaufschlagbaren Anpressscheiben jeweils ein Axialwälzlager angeordnet ist. Durch geeignete Ausbildung des Kupplungsgehäuses und die Verwendung eines Axialwälzlagers je Lamellenkupplung gelingt es, die Kupplungsbetätigung so umzustellen, dass keine Relativdrehungen ausgesetzten Dichtungsteile (zum Beispiel Kolbenringe) erforderlich sind und in den Getriebe-Eingangswellen entsprechende Zuführkanäle und Dichtungsanordnungen entfallen können. Die Drucköl- und gegebenenfalls Kühlölversorgung kann über in das Getriebegehäuse integrierte Zuführkanäle bewerkstelligt werden und ermöglicht eine verbesserte Druckölzuführung mit entsprechend direkter, feinfühliger Kupplungsbetätigung.

In besonders vorteilhafter Weise kann dabei das trommelförmige Kupplungsgehäuse über eine Zentralnabe mit der Antriebswelle fest verbunden und einseitig offen ausgeführt sein, wobei von der offenen Seite her die beiden Lamellenkupplungen und die beiden Anpressscheiben einsetzbar und die äußere Anpressscheibe entsprechend betätigbar ist.

Des Weiteren kann die der geschlossenen Stirnseite des Kupplungsgehäuses zugewandte Anpressscheibe der einen Lamellenkupplung mit radial nach innen ragenden Armen durch korrespondierende Ausnehmungen in der Stirnwand des Kupplungsgehäuses von außen betätigbar sein. Dadurch können trotz eines zentralen Antriebs des Kupplungsgehäuses über eine koaxiale Antriebswelle die Lamellenkupplungen von beiden Seiten her über deren Anpressscheiben betätigt werden.

In baulich und konstruktiv einfacher Weise können die Ringkolben im Querschnitt L-förmige Ringabschnitte aufweisen, auf denen die Axialwälzlager geführt sind. Die Ringabschnitte können bevorzugt unmittelbar an die Ringkolben angeformt sein.

Ferner können die im Querschnitt U-förmigen Ringkolben diese umschließende Ringmanschetten tragen und flüssigkeitsdicht in ringnutförmige Ausnehmungen der Stirnwände des Getriebegehäuses eingesetzt sein, in die auch die Kanäle für die Zufuhr von Druck- und gegebenenfalls Kühlöl münden. Für das Kühlöl können gegebenenfalls über die Ringkolben gesteuerte Abströmöffnungen vorgesehen sein.

Des Weiteren können die ringförmigen oder in Umfangsrichtung unterbrochenen Kontaktflächen der Anpressscheiben zu den Druckringen der Axialwälzlager im Querschnitt gesehen sphärisch ausgeführt sein, um eine verschleißarme Krafteinleitung von den Druckringen in die Anpressscheiben herzustellen.

Erfindungsgemäß sind die Kupplungslamellen alternierend durch Stahlscheiben und durch beidseitig Reibbeläge tragende Mitnehmerscheiben gebildet, die in Umfangsrichtung formschlüssig mit dem Kupplungsgehäuse bzw. den Kupplungsnaben verbunden sind, wobei radial außerhalb oder innerhalb der Reibbeläge die Kupplungslamellen trennende, ringförmige Rückstellfedern angeordnet sind, die entweder als Tellerfedern oder als Wellscheiben ausgeführt sind. Die Rückstellfedern der vorgeschlagenen Art ermöglichen eine schnelle und trotzdem besonders feinfühlige Steuerung der Kupplungsmomente in den Lamellenkupplungen, was besonders bei Doppelkupplungsgetrieben durch die teils überschneidende Momentenübertragung besonders vorteilhaft ist.

Fertigungstechnisch und funktionell besonders vorteilhaft können die beiden Kupplungsnaben durch im Querschnitt L-förmige Ringteile gebildet sein, deren Radialflansche mit Hohlwellenabschnitten der Eingangswellen des Wechselgetriebes fest verbunden sind. Neben der daraus resultierenden Montagevorteile beim Zusammenbau der Doppelkupplung können die Kupplungsnaben als Fließpresssteile gleicher Geometrie hergestellt werden und baulich günstig in das Kupplungsgehäuse integriert sein.

Die weiteren Patentansprüche beschreiben eine besonders vorteilhafte Wälzlagerung der mit den Getriebewellen verbundenen Kupplungselemente mit weitgehendst von Biegemomenten entlasteter Abstützung auch bei hohen Momentenübertragungen.

Ein Ausführungsbeispiel der Erfindung ist im Folgenden mit weiteren Einzelheiten näher erläutert. Die schematische Zeichnung zeigt in:
- Fig. 1: in einem Längsschnitt die obere Hälfte einer Doppelkupplung für ein Doppelkupplungs-Wechselgetriebe in einem Kraftfahrzeug mit zwei Lamellenkupplungen; und
- Fig. 2: einen Ausschnitt der Kupplungslamellen einer der Lamellenkupplungen mit eingesetzten Wellscheiben als Rückstellfedern.

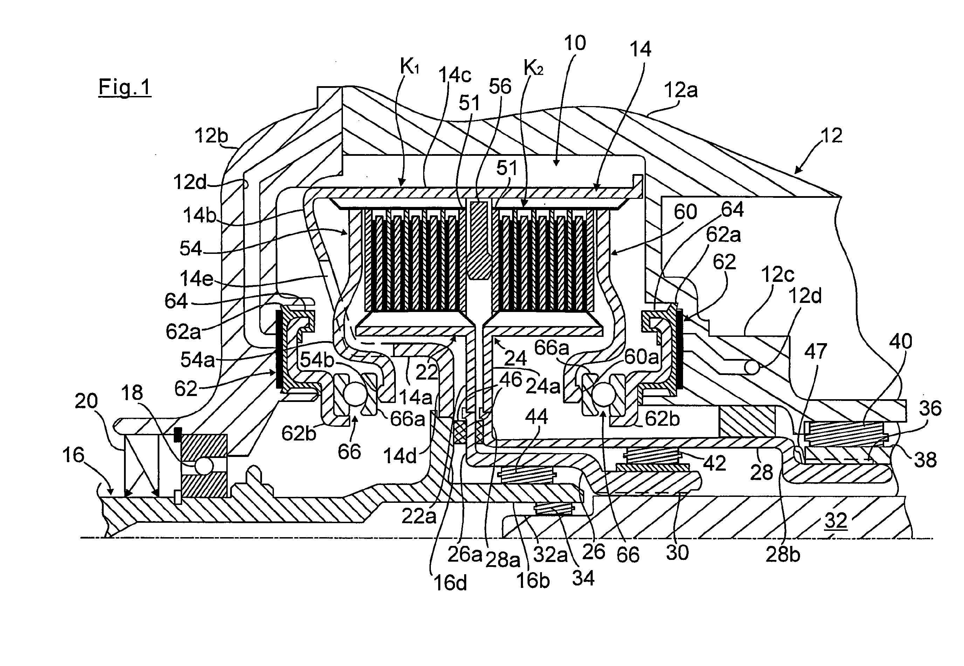

In der Fig. 1 ist mit 10 eine Doppelkupplung für ein nicht dargestelltes Doppelkupplungs-Wechselgetriebe für Kraftfahrzeuge bezeichnet, die in einem Getriebegehäuse 12 angeordnet ist. Ein die Doppelkupplung 10 umschließender Gehäuseabschnitt 12a und ein Gehäusedeckel 12b sind dabei innerhalb einer Kupplungsglocke (nicht dargestellt) an das Getriebegehäuse 12 bzw. dessen vorderer Stirnwand 12c angebaut.

Die Doppelkupplung 10 weist zwei nasslaufende Lamellenkupplungen K1 und K2 auf, die innerhalb eines trommelförmigen Kupplungsgehäuses 14 angeordnet sind.

Das antreibende Kupplungsgehäuse 14 setzt sich aus einer radial inneren Zentralnabe 14a, einem Radialflansch 14b und einem Außenzylinder 14c zusammen. Die Zentralnabe 14a weist ferner einen nach innen ragenden Flanschabschnitt 14d auf, der mit einem an eine Antriebswelle 16 angeformten, sich radial nach außen erstreckenden Anschlussflansch 16d fest verbunden ist.

Die Antriebswelle 16 ist in nicht dargestellter Weise zum Beispiel über einen Drehschwingungsdämpfer bzw. eine Zweimassenschwungrad mit der Kurbelwelle einer Brennkraftmaschine verbunden und treibt das Kupplungsgehäuse 14 der Doppelkupplung 10 an.

Die Antriebswelle 16 ist in dem Gehäusedeckel 12b über ein axial und radial führendes Kugellager 18 (Vierpunktlager) drehbar gelagert und mittels eines eingesetzten Wellendichtringes 20 nach außen abgedichtet.

Innerhalb des Kupplungsgehäuses 14 sind die zwei abtreibenden Kupplungsnaben 22, 24 der Lamellenkupplungen K1, K2 angeordnet, die sich jeweils aus im Querschnitt L-förmigen Ringteilen zusammensetzen, deren radial nach innen ragende Flanschabschnitte 22a, 24a mit Anschlussflanschen 26a, 28a von koaxial zueinander angeordneten Hohlwellenabschnitten 26, 28 fest verbunden sind.

Der innere Hohlwellenabschnitt 26 ist über eine Steckverzahnung 30 mit einer ersten Eingangswelle 32 des Wechselgetriebes trieblich verbunden, wobei ein im Durchmesser kleinerer Fortsatz 32a der Eingangswelle 32 in einen über den Flanschabschnitt 16a verlängerten Abschnitt 16b der Antriebswelle 16 einragt und in einem dazwischen angeordneten Radialwälzlager 34 drehgelagert ist.

Der äußere Hohlwellenabschnitt 28 ist über eine weitere Steckverzahnung 36 mit der zweiten Eingangswelle 38 des Wechselgetriebes trieblich verbunden, wobei im Steckverbindungsbereich ein mit der Eingangswelle 38 zusammenwirkendes Radialwälzlager 40 angeordnet ist, das in eine Lageraufnahme der Stirnwand 12b des Getriebegehäuses 12 eingesetzt ist.

Zwischen den beiden Hohlwellenabschnitten 26, 28 sowie zwischen dem verlängerten Abschnitt 16b der Antriebswelle 16 und dem inneren Hohlwellenabschnitt 26 sind weitere Radialwälzlager 42, 44 angeordnet, die eine in sich biegesteife Lagerung der Kupplungselemente und der Getriebewellen sicherstellen.

Ferner sind zwischen den Radialflanschen 26a, 28a der Hohlwellenabschnitte 26, 28 und zwischen dem Flanschabschnitt 16a der Antriebswelle 16 und dem diesen unmittelbar benachbarten Radialflansch 26a Axialwälzlager 46 vorgesehen, die die an den Kupplungselementen auftretenden Axialkräfte und -momente abstützen. Eine zwischen dem äußeren Hohlwellenabschnitt 28 an einer Ringschulter 28b und an der Stirnseite der weiterführenden Eingangswelle 38 des Wechselgetriebes angeordnete Tellerfeder 47 übt auf die Axialwälzlager 46 eine definierte, Lagerspiel ausschließende Vorspannung aus.

Die besagten Radialwälzlager 34, 40, 42, 44 sind, wie aus der Fig. 1 ersichtlich ist, durch Nadellager gebildet; gleiches gilt auch für die Axialwälzlager 46.

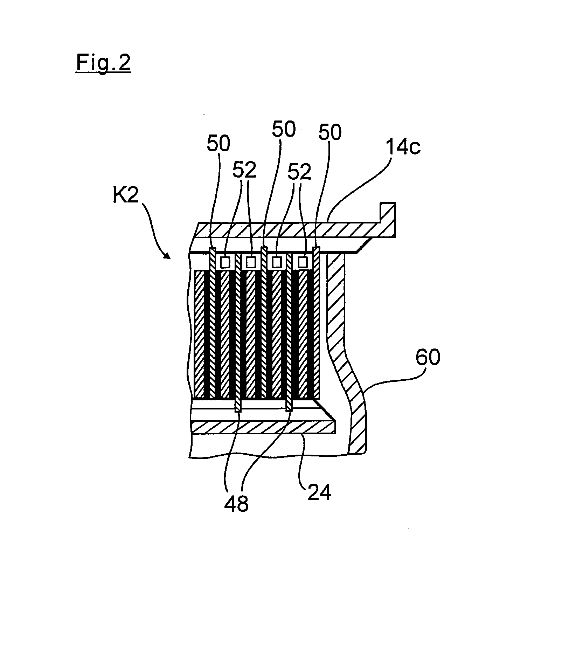

In dem einseitig offenen Außenzylinder 14c des Kupplungsgehäuses 14 und an den Kupplungsnaben 22, 24 sind achsparallele Nuten (ohne Bezugszeichen) eingearbeitet, in die alternierend Stahlscheiben 48 (vgl. vergrößerten Ausschnitt gemäß Fig. 2) und Reibbeläge (schraffiert) tragende Stahl-Mitnehmerscheiben 50 als Kupplungslamellen in Umfangsrichtung formschlüssig einragen.

Dabei sind die Reibbeläge an den Mitnehmerscheiben 50 radial nach außen zurückgesetzt ausgeführt und in die dadurch gebildeten, ringförmigen Zwischenräume Wellscheiben 52 eingesetzt, die als Rückstellfedern wirken bzw. die Kupplungslamellen 48, 50 im geöffneten Zustand auseinander drücken. Anstelle der Wellscheiben 52 können gegebenenfalls auch Tellerfedern verwendet sein.

Die Lamellenkupplungen K1, K2 (Fig. 1) sind von der offenen Seite des Kupplungsgehäuses 14 montiert, wobei wie ersichtlich die Lamellenkupplung K1 mit zunächst einer radial nach innen führenden Anpressscheibe 54 und dann wie dargestellt den Kupplungslamellen 48, 50 und schließlich einer Anschlagscheibe 51 eingesetzt wird.

Sodann wird ein ringförmiges Trennelement 56 fest in den Außenzylinder 14c des Kupplungsgehäuses 14 eingesetzt, das die beiden Lamellenkupplungen K1, K2 funktionell trennt und zum Beispiel eingepresst und/oder über Sicherungsringe axial unverschiebbar gehalten ist.

Danach wird die Lamellenkupplung K2 in umgekehrter Reihenfolge montiert und mit deren Anpressscheibe 60 abgeschlossen. Mit der Montage der Kupplungslamellen 48, 50 werden selbstverständlich auch die besagten Wellscheiben 52 eingesetzt (in Fig. 1 der besseren Übersichtlichkeit wegen nicht dargestellt).

Während die in der Fig. 1 rechte Anpressscheibe 60 die offene Seite des Kupplungsgehäuses 14 abdeckt, erstrecken sich an der linken Anpressscheibe 54 radial nach innen angeformte Arme 54a (zum Beispiel drei Arme - aus der Schnittzeichn. nicht ersichtlich) durch korrespondierende Ausnehmungen 14e in der Stirnwand 14b des Kupplungsgehäuses 14 nach außen.

Die hydraulische Betätigung der beiden Lamellenkupplungen K1, K2 erfolgt über beidseitige Ringkolben 62, die in Ringnuten 64 der Stirnwand 12c des Getriebegehäuses 12 bzw. im Getriebedeckel 12b axial verschiebbar angeordnet sind. Die im Querschnitt U-förmigen Ringkolben 62 sind mit gummielastischen Dichtmanschetten 62a überzogen und flüssigkeitsdicht in die Ringnuten 64 eingesetzt.

Die hydraulische Druckbeaufschlagung der Ringkolben 62 erfolgt über in den Getriebedeckel 12b und in der Stirnwand 12c vorgesehene Kanäle 12d, die an eine nicht dargestellte Getriebesteuerung mit entsprechenden Steuerventilen und einer Druckmittelquelle angeschlossen sind. Über diese Kanäle 12d kann zugleich die Zuführung von Kühlöl mit entsprechenden Abströmöffnungen zum Kupplungsgehäuse 14 bewerkstelligt sein.

An die Ringkolben 62 sind im Querschnitt L-förmige Ringabschnitte 62b angeformt, auf denen Drucklager bzw. Axialwälzlager 66 gehalten sind. Die als Kugellager ausgeführten Axialwälzlager 66 wirken mit ihren freien Druckringen 66a auf sphärisch ausgebildete Kontaktflächen 54b, 60b der Anpressscheiben 54, 60 der beiden Lamellenkupplungen K1, K2. Die besagten Kontaktflächen 54b der linken Anpressscheibe 54 sind nicht wie bei der rechten Anpressscheibe ringförmig, sondern umfangsverteilt an den Armen 54a der Anpressscheibe 54 ausgebildet.

Soll eine der Lamellenkupplungen K1, K2 geschlossen werden, so wird über die Getriebesteuerung der entsprechende Ringkolben 62 mit Drucköl beaufschlagt, so dass über das Axialwälzlager 66 die korrespondierende Anpressscheibe 54, 60 die Kupplungslamellen 48, 50 und die Wellscheiben 52 zusammendrückt.

Dadurch wird zunehmend Drehmoment von der Antriebswelle 16 und dem Kupplungsgehäuse 14 über eine der Kupplungsnaben 22, 24 auf eine der Eingangswellen 32, 36 des Wechselgetriebes übertragen.

Soll die Doppelkupplung 10 umgeschaltet werden, so wird die momentan geschlossene Lamellenkupplung (zum Beispiel K1) geöffnet und nahezu ohne Zugkraftunterbrechung die andere Lamellenkupplung (zum Beispiel K2) geschlossen. Die Rückstellkraft der eingesetzten Wellscheiben 52 sorgt dabei für ein schnelles Öffnen der dann inaktiven Lamellenkupplung (K1).

## Patentansprüche

1. Doppelkupplung für ein Doppelkupplungs-Wechselgetriebe in Kraftfahrzeugen, mit zwei nasslaufenden Lamellenkupplungen (K1, K2), die axial hintereinander in einem Getriebegehäuse (12) angeordnet sind, mit einem antreibenden Kupplungsgehäuse (14) und zwei auf Getriebe-Eingangswellen (32, 38) abtreibenden Kupplungsnaben (22, 24), die wechselweise über Kupplungslamellen (48, 50) mit dem Kupplungsgehäuse (14) trieblich verbindbar sind, sowie mit hydraulisch über Drucköl beaufschlagbaren Ringkolben (62), die alternierend über Anpressscheiben (54, 60) die Kupplungslamellen (48, 50) beaufschlagen, und
wobei zwischen den Ringkolben (62) und den von ausserhalb des Kupplungsgehäuses (14) beaufschlagbaren Anpressscheiben (54, 60) jeweils ein Axialwälzlager (66) angeordnet ist, **dadurch gekennzeichnet, dass** die Ringkolben (62) in beiderseits der Lamellenkupplungen (K1, K2) vorgesehenen Stirnwänden (12b, 12c) des Getriebegehäuses (12) verschiebbar gelagert sind und über in den Stirnwänden (12b, 12c) angeordnete Kanäle (12d) mit Drucköl versorgbar sind und die Kupplungslamellen alternierend durch Stahlscheiben (48) und durch beidseitig Reibbeläge tragende Mitnehmerscheiben (50) gebildet sind, die in Umfangsrichtung formschlüssig mit dem Kupplungsgehäuse (14) bzw. den Kupplungsnaben (22, 24) verbunden sind und dass radial außerhalb oder innerhalb der Reibbeläge die Kupplungslamellen trennende, ringförmige Rückstellfedern (52) angeordnet sind.

2. Doppelkupplung nach Anspruch 1, **dadurch gekennzeichnet, dass** das trommelförmige Kupplungsgehäuse (14) über eine Zentralnabe (14c) mit der Antriebswelle (16) fest verbunden und einseitig offen ausgeführt ist, wobei von der offenen Seite her die beiden Lamellenkupplungen K1, K2 und die beiden Anpressscheiben (54, 60) einsetzbar sind.

3. Doppelkupplung nach Anspruch 2, **dadurch gekennzeichnet, dass** die der geschlossenen Stirnseite des Kupplungsgehäuses (14) zugewandte Anpressscheibe (54) der einen Lamellenkupplung K1 mit radial nach innen ragenden Armen (54a) durch korrespondierende Ausnehmungen (14e) in der Stirnwand (14b) des Kupplungsgehäuses (14) von außen betätigbar ist.

4. Doppelkupplung nach Anspruch 1, **dadurch gekennzeichnet, dass** die Ringkolben (62) im Querschnitt L-förmige Ringabschnitte (62a) aufweisen, auf denen die Axialwälzlager (66) geführt sind.

5. Doppelkupplung nach Anspruch 1 oder 4, **dadurch gekennzeichnet, dass** die im Querschnitt U-förmigen Ringkolben (62) diese umschließende Ringmanschetten (62a) tragen und flüssigkeitsdicht in ringnutförmige Ausnehmungen (64) der Stirnwände (12b, 12c) eingesetzt sind, in die auch die Kanäle (12d) für die Zufuhr von Druck- und gegebenenfalls Kühlöl münden.

6. Doppelkupplung nach einem oder mehreren der vorhergehenden Ansprüche, **dadurch gekennzeichnet, dass** die ringförmigen oder in Umfangsrichtung unterbrochenen Kontaktflächen (54b, 60b) der Anpressscheiben (54, 60) zu den Druckringen (66a) der Axialwälzlager (66) im Querschnitt gesehen sphärisch ausgeführt sind.

7. Doppelkupplung nacheinem der vorhergehenden Ansprüche, **dadurch gekennzeichnet, dass** die Rückstellfedern durch Tellerfedern gebildet sind.

8. Doppelkupplung nach einem der Ansprüche 1 bis 6, **dadurch gekennzeichnet, dass** die Rückstellfedern durch Wellscheiben (52) gebildet sind.

9. Doppelkupplung nach einem oder mehreren der vorhergehenden Ansprüche, **dadurch gekennzeichnet, dass** die beiden Kupplungsnaben (22, 24) durch im Querschnitt L-förmige Ringteile gebildet sind, deren Radialflansche (22a, 24a) mit Hohlwellenabschnitten (26, 28) der Eingangswellen (32, 38) des Wechselgetriebes fest verbunden sind.

10. Doppelkupplung nach Anspruch 9, **dadurch gekennzeichnet, dass** zwischen einander benachbarten Anschlussflanschen (26a, 28a) der Hohlwellenabschnitte (26, 28) der Eingangswellen (32, 38) und zwischen einem Anschlussflansch (16a) der in das Kupplungsgehäuse (14) einragenden, mit der Zentralnabe (14a) des Kupplungsgehäuses (14) fest verbundenen Antriebswelle (16) und dem benachbarten Hohlwellenabschnitt (26) jeweils ein Axialwälzlager (46) angeordnet ist.

11. Doppelkupplung nach den einem oder mehreren der vorhergehenden Ansprüche, **dadurch gekennzeichnet, dass** die Antriebswelle (16) über den Anschlussflansch (16a) für die Zentralnabe (14a) hinaus verlängert ist und dass zwischen dem verlängerten Abschnitt (16b) und den beiden Hohlwellenabschnitten (26, 28) jeweils ein Radialwälzlager (44, 42, 40) eingesetzt ist.

12. Doppelkupplung nach Anspruch 11, **dadurch gekennzeichnet, dass** der äußere Hohlwellenabschnitt (28) über eine Steckverzahnung (36) mit der weiterführenden, hohlen Eingangswelle (38) des Wechselgetriebes verbunden ist und dass das korrespondierende Radialwälzlager (40) im Steckverbindungsbereich und in der korrespondierenden Stirnwand (12c) des Getriebegehäuses (12) angeordnet ist.

13. Doppelkupplung nach einem oder mehreren der vorhergehenden Ansprüche, **dadurch gekennzeichnet, dass** der radial innere Hohlwellenabschnitt (26) mit der radial inneren Eingangswelle (32) des Wechselgetriebes über eine Steckverzahnung (30) verbunden ist und zusätzlich über ein Radialwälzlager (34) in dem verlängerten Abschnitt (16b) der Antriebswelle (16) geführt ist.

14. Doppelkupplung nach einem oder mehreren der vorhergehenden Ansprüche, **dadurch gekennzeichnet, dass** zwischen dem radial äußeren Hohlwellenabschnitt (28) und der weiterführenden Eingangswelle (38) des Wechselgetriebes eine den Hohlwellenabschnitt (28) axial gegen die Antriebswelle (16) vorspannende Tellerfeder (47) eingesetzt ist.

## Claims

1. Twin clutch for a twin-clutch variable speed transmission in motor vehicles, comprising two wet-running multi-disc clutches (K1, K2) which are arranged axially behind one another in a transmission housing (12), with a driving clutch housing (14) and two transmission hubs (22, 24) which drive transmission input shafts (32, 38) and are alternately drivingly connectable to the clutch housing (14) via clutch discs (48, 50), and comprising ring pistons (62) which can be hydraulically acted upon by means of pressure oil and which act alternately on the clutch discs (48, 50) via pressure discs (54, 60), and wherein axial roller bearings (66) are respectively arranged between the ring pistons (62) and the pressure discs (54, 60) which can be actuated from outside the clutch housing (14),
**characterised in that**
the ring pistons (62) are movably supported in end walls (12b, 12c) of the transmission housing (12) which are provided either side of the multi-disc clutches (K1, K2) and said ring pistons (62) can be supplied with pressure oil through channels (12d) arranged in the end walls (12b, 12c) and the clutch discs are formed alternately by steel discs (48) and by follower discs (50) provided with friction linings on both sides, which are connected to the clutch housing (14) and the transmission hubs (22, 24) by positively locking engagement in the circumferential direction, and **in that** annular restoring springs (52) separating the clutch discs are arranged radially outside or inside the friction linings .

2. Twin clutch according to claim 1, **characterised in that** the drum-shaped clutch housing (14) is securely connected to the drive shaft (16) via a central hub (14c) and is constructed to be open on one side, the two multi-disc clutches K1, K2 and the two pressure discs (54, 60) being insertable from the open side.

3. Twin clutch according to claim 2, **characterised in that** the pressure disc (54) of one multi-disc clutch K1, facing the closed end face of the clutch housing (14), with radially inwardly projecting arms (54a) can be actuated from outside through corresponding recesses (14e) in the end wall (14b) of the clutch housing (14).

4. Twin clutch according to claim 1, **characterised in that** the ring pistons (62) have ring sections (62a) of L-shaped cross section, on which the axial roller bearings (66) are guided.

5. Twin clutch according to claim 1 or 4, **characterised in that** the ring pistons (62) of U-shaped cross section carry ring cuffs (62a) which surround them and are inserted in fluid-tight manner into annular groove-shaped recesses (64) in the end walls (12b, 12c), into which the channels (12d) for supplying pressure and optionally coolant oil also lead.

6. Twin clutch according to one or more of the preceding claims, **characterised in that** the annular or circumferentially discontinuous contact surfaces (54b, 60b) of the pressure discs (54, 60) with the pressure rings (66a) of the axial roller bearings (66) are spherical when viewed in cross-section.

7. Twin clutch according to one of the preceding claims, **characterised in that** the restoring springs are formed by disc springs.

8. Twin clutch according to one of claims 1 to 6, **characterised in that** the restoring springs are formed by corrugated discs (52).

9. Twin clutch according to one or more of the preceding claims, **characterised in that** the two transmission hubs (22, 24) are formed by ring portions which have an L-shaped cross section, the radial flanges (22a, 24a) of which are securely connected to hollow shaft sections (26, 28) of the input shafts (32, 38) of the variable speed transmission.

10. Twin clutch according to claim 9, **characterised in that** a respective axial roller bearing (46) is arranged between adjacent connection flanges (26a, 28a) of the hollow shaft sections (26, 28) of the input shafts (32, 38) and between a connection flange (16a) of the drive shaft (16) which protrudes into the clutch housing (14) and is fixedly connected to the central hub (14a) of the clutch housing (14), and the adjacent hollow shaft section (26).

11. Twin clutch according to one or more of the preceding claims, **characterised in that** the drive shaft (16) is extended beyond the connection flange (16a) for the central hub (14a), and **in that** a respective radial roller bearing (44, 42, 40) is inserted between the extended section (16b) and the two hollow shaft sections (26, 28).

12. Twin clutch according to claim 11, **characterised in that** the outer hollow shaft section (28) is connected to the further extending hollow input shaft (38) of the variable speed transmission by means of a spline (36) and **in that** the corresponding radial roller bearing (40) is arranged in the spline connection region and in the corresponding end wall (12c) of the transmission housing (12).

13. Twin clutch according to one or more of the preceding claims, **characterised in that** the radially inner hollow shaft section (26) is connected to the radially inner input shaft (32) of the variable speed transmission by means of a spline (30) and is additionally guided by means of a radial roller bearing (34) in the extended section (16b) of the drive shaft (16).

14. Twin clutch according to one or more of the preceding claims, **characterised in that** a disc spring (47) which axially biases the hollow shaft section (28) towards the drive shaft (16) is inserted between the radially outer hollow shaft section (28) and the further extending input shaft (38) of the variable speed transmission.

## Revendications

1. Double embrayage pour une boîte de vitesse à double embrayage dans des véhicules automobiles, avec deux embrayages à disques multiples (K1, K2) lubrifiés, qui sont agencés axialement l'un derrière l'autre dans un carter de boîte (12), avec un carter d'embrayage (14) propulseur et deux moyeux d'embrayage (22, 24) de sortie agissant sur des arbres d'entrée de transmission (32, 38), qui peuvent être en liaison motrice avec le carter d'embrayage (14) en alternance via des disques d'embrayage (48, 50), ainsi qu'avec des pistons annulaires (62) qui peuvent être alimentés de façon hydraulique avec de l'huile sous pression et qui agissent sur les disques d'embrayage (48, 50) en alternance via des disques de pression (54, 60),
un roulement à rouleaux axial (66) étant agencé à chaque fois entre les pistons annulaires (62) et les disques de pression (54, 60) pouvant être alimentés en dehors du carter d'embrayage (14),
**caractérisé en ce que** les pistons annulaires (62) sont logés de manière à pouvoir se déplacer dans des parois frontales (12b, 12c), prévues des deux côtés des embrayages à disques multiples (K1, K2), du carter de boîte (12) et peuvent être alimentés en huile sous pression via des canaux (12d) agencés dans les parois frontales (12b, 12c),
**en ce que** les disques d'embrayage (48, 50) sont formés en alternance par des disques en acier (48) et par des disques d'entraînement (50) portant des garnitures de friction des deux côtés, lesquels disques sont en liaison par concordance de forme en direction circonférentielle avec le carter d'embrayage (14) respectivement avec les moyeux d'embrayage (22, 24) et **en ce que** des ressorts de rappel (52), annulaires et séparant les disques d'embrayage, sont agencés radialement à l'extérieur ou à l'intérieur des garnitures de friction.

2. Double embrayage selon la revendication 1, **caractérisé en ce que** le carter d'embrayage (14) en forme de tambour est assemblé à l'arbre moteur (16) par l'intermédiaire d'un moyeu central (14c) et est réalisé ouvert d'un côté, les deux embrayages à disques multiples (K1, K2) et les deux disques de pression (54, 60) pouvant être mis en place à partir du côté ouvert.

3. Double embrayage selon la revendication 2, **caractérisé en ce que** le disque de pression (54), proche du côté frontal fermé du carter d'embrayage (14), d'un embrayage à disques multiples (K1) avec des bras (54a) s'élevant radialement vers l'intérieur peut être actionné de l'extérieur par des évidements correspondants (14e) dans la paroi frontale (14b) du carter d'embrayage (14).

4. Double embrayage selon la revendication 1, **caractérisé en ce que** les pistons annulaires (62) comportent des tronçons annulaires (62a) qui sont en coupe transversale en forme de L et sur lesquels les roulements à rouleaux axiaux (66) sont guidés.

5. Double embrayage selon la revendication 1 ou 4, **caractérisé en ce que** les pistons annulaires (62) en coupe transversale en forme de U portent des manchons annulaires (62a) les entourant et sont placés, de façon étanche à tout liquide, dans des évidements en forme de rainures annulaires (64) des parois frontales (12b, 12c) dans lesquels débouchent aussi les canaux (12d) destinés à l'amenée d'huile sous pression et éventuellement d'huile de refroidissement.

6. Double embrayage selon une ou plusieurs des revendications précédentes, **caractérisé en ce que** les surfaces de contact (54b, 60b), annulaires ou interrompues en direction circonférentielle, des disques de pression (54, 60) sont réalisées sphériques, vues en coupe transversale, face aux anneaux de serrage (66a) des roulements à rouleaux axiaux (66).

7. Double embrayage selon l'une des revendications précédentes, **caractérisé en ce que** les ressorts de rappel sont formés par des rondelles Belleville.

8. Double embrayage selon l'une des revendications 1 à 6, **caractérisé en ce que** les ressorts de rappel sont formés par des rondelles ondulées (52).

9. Double embrayage selon une ou plusieurs des revendications précédentes, **caractérisé en ce que** les deux moyeux d'embrayage (22, 24) sont formés par des pièces annulaires, en coupe transversale en forme de L, dont les brides radiales (22a, 24a) sont assemblées à des tronçons d'arbre creux (26, 28) des arbres d'entrée (32, 38) de la boîte de vitesse.

10. Double embrayage selon la revendication 9, **caractérisé en ce que**, entre des brides de raccordement (26a, 28a), voisines l'une de l'autre, des tronçons d'arbre creux (26, 28) des arbres d'entrée (32, 38) et entre une bride de raccordement (16a) de l'arbre moteur (16), pénétrant dans le carter d'embrayage (14) et assemblé au moyeu central (14a) du carter d'embrayage (14), et le tronçon d'arbre creux (26) voisin, est agencé à chaque fois un roulement à rouleaux axial (46).

11. Double embrayage selon une ou plusieurs des revendications précédentes, **caractérisé en ce que** l'arbre moteur (16) est prolongé au-delà de la bride de raccordement (16a) pour le moyeu central (14a) et **en ce que**, entre le tronçon prolongé (16b) et les deux tronçons d'arbre creux (26, 28), est agencé à chaque fois un roulement à rouleaux radial (44, 42, 40).

12. Double embrayage selon la revendication 11, **caractérisé en ce que** le tronçon d'arbre creux extérieur (28) est relié par l'intermédiaire d'une cannelure d'emboîtement. (36) à l'arbre d'entrée (38), creux et menant plus loin, de la boîte de vitesse et **en ce que** le roulement à rouleaux radial correspondant (40) est agencé dans la zone de liaison par emboîtement et dans la paroi frontale correspondante (12c) du carter de boîte (12).

13. Double embrayage selon une ou plusieurs des revendications précédentes, **caractérisé en ce que** le tronçon d'arbre creux (26) radialement à l'intérieur est relié à l'arbre d'entrée (32), radialement à l'intérieur, de la boîte de vitesse par l'intermédiaire d'une cannelure d'emboîtement (30) et est guidé en plus par l'intermédiaire d'un roulement à rouleaux radial (34) dans le tronçon prolongé (16b) de l'arbre moteur (16) .

14. Double embrayage selon une ou plusieurs des revendications précédentes, **caractérisé en ce que**, entre le tronçon d'arbre creux (28) radialement à l'extérieur et l'arbre d'entrée (38), menant plus loin, de la boîte de vitesse, est placée une rondelle Belleville (47) précontraignant axialement le tronçon d'arbre creux (28) contre l'arbre moteur (16).
